# EUROPEAN PATENT SPECIFICATION

(11) **EP 3 655 366 B1**
(45) Date of publication and mention of the grant of the patent: **25.11.2026**
(21) Application number: 18755348.2
(22) Date of filing: 17.07.2018
(51) Int. Cl.: C02F 1/52, C23C 22/00, C02F 1/44, C02F 101/10, C02F 103/44

(54) **RECYCLING AUTOMOTIVE PHOSPHATE RINSE WATER STREAM**
RECYCLING EINES KFZ-PHOSPHATSPÜLWASSERSTROMS
RECYCLAGE DE COURANT D'EAU DE RINÇAGE PHOSPHATÉE D'AUTOMOBILE

(30) Priority: 18.07.2017 US 201762534080 P
(43) Date of publication of application: 27.05.2020
(73) Proprietor: Ecolab USA, Inc., St. Paul, Minnesota 55102 (US)
(72) Inventor: WILLIAMS, Daniel M., Greenwood, Indiana 46143 (US); MACKOVSKI, Tony Veljan, Shelby Twp, Michigan 48315 (US); TAIT, Bruce, Libertyville, Illinois 60048 (US); MIKNEVICH, Joseph Peter, Coraopolis, Pennsylvania 15108 (US); BOGDA, Alex Michael, SAINT PAUL, MN 55102 (US); NARAYANAN, Aarthi, Naperville, Illinois 60563 (US); VON DRASEK, William A., Oak Forest, Illinois 60452 (US)
(74) Representative: Godemeyer Blum Lenze Patentanwälte Partnerschaft mbB - werkpatent
(86) International application number: PCT/US2018/042477
(87) International publication number: WO 2019/018387

(56) References cited:
- WO-A1-2004/050949
- WO-A1-2016/036390
- DE-A1- 4 112 391
- JP-A- 2006 281 067
- JP-A- 2007 260 556
- JP-A- H01 199 608
- JP-A- H11 118 680
- KR-B1- 101 269 261
- US-A- 5 747 342
- ECOLAB: "OGM Plus. Oval Gear Meter with enhanced chemical resistance", 28 November 2012 (2012-11-28), XP055509386, Retrieved from the Internet <URL:https://www.ecolab-engineering.com/fileadmin/_migrated/content_uploads/OGMPlusSellSheetF_B_Engl_04.pdf> [retrieved on 20180925]

## Description

### BACKGROUND

### 1. Field of the Invention

The present disclosure generally relates to recycling water. More particularly, the disclosure pertains to recycling automotive rinse water.

### 2. Description of the Related Art

Preparing car bodies for painting involves a series of pre-treatment stages. One of pre-treatment stages protects the car body from corrosion by treating the car body with anti-corrosion agents, such as zinc phosphate. The phosphating process improves adhesion of the paint primer to the metal in addition to serving as an anti-corrosion treatment.

Prior to the phosphating process, the car body may be washed with a cleaning agent to remove oils and dirt. The car body may then pass through several rinse stages before the activation and phosphate dip treatments. After the phosphate dip, the car body is rinsed and then treated with a passivation spray. Passivation can include other chemicals that enhance the anti-corrosion properties of the phosphate coating.

The rinsing stages require significant quantities of water to remove excess phosphate from the car body. Phosphate contaminated rinse water presents challenges for treatment and reuse, one of which is that the phosphate levels in the used rinse water can vary significantly. This variation can result in overdosing of expensive phosphate control agents.

WO 2016/036390 A1 discloses that the removal of oxoanions from an aqueous stream having a concentration of a metal cation and a concentration of an oxoanion that varies over time may involve continuously monitoring the concentration of the metal cation and the concentration of the oxoanion to provide a current metal cation concentration and a current oxoanion concentration. It discloses that a metal cation source and an aluminum reagent may be added to the aqueous stream based on the measured current metal cation concentration and the current oxoanion concentration. The amount of the metal cation source and the aluminum reagent added to the stream may be effective to reduce the concentration of the oxoanion in the aqueous stream below a target threshold.
JP 2007 260556 A relates to the problem to provide a phosphoric acid-containing wastewater treatment method and apparatus which can efficiently coagulate and remove phosphoric acid in phosphoric acid-containing wastewater by using a small amount of an iron (III) salt. KR 101269261 B1 provides an advanced wastewater treatment system and a method thereof to have an effective simultaneous nitrogen and phosphorus removal effect by maximizing the phosphorus release, and to be able to remarkably reduce the coagulant consumption amount. DE 4112391 A1 relates to optimisation of the flocculating agent and flocculating aid usage of residual phosphrous contents and suspended matter in the discharge from municipal clarification plants. WO 2004/050949 A1 relates to a novel method for phosphatizing metal surfaces characterized by guiding a wash fluid after phosphation into a cleaning solution or recovering a wash liquid before phosphation.
US 5747342 A describes methods and apparatus for monitoring and controlling pH, phosphate, and sodium to phosphate ratio in boiler systems operating with captive alkalinity chemistry.

### BRIEF SUMMARY

In some embodiments, an apparatus for treating water containing phosphate is disclosed. The apparatus may include a process water line; a sample process water line in fluid communication with the process water line; a dilution line in fluid communication with the sample process water line; a diluted process water line in fluid communication with the sample process water line, dilution line, and a phosphate analyzer; and a chemical additive feed line in fluid communication with the process water line downstream from the sample process water line.

In some embodiments, the sample process water line and the dilution line each include an oval gear meter.

In some embodiments, the apparatus may include a bypass water line in fluid communication with the process water line.

In some embodiments, the apparatus may include an ultrafiltration unit in line with the process water line.

In some embodiments, the apparatus may include a reverse osmosis unit in line with the process water line.

In some embodiments, the process water line, the sample process water line, the dilution line, the diluted process water line, and the chemical additive feed line may each include a control valve.

In some embodiments, the apparatus may include a programmed logic controller in communication with the phosphate analyzer.

In some embodiments, the process water line may include a flow meter.

In some embodiments, the chemical additive feed line may include a flow meter and a chemical feed pump.

The invention is a method of treating water according to claim 1. The method includes *inter alia* diverting a portion of process water comprising phosphate; diluting the portion of the process water with dilution water to form diluted process water; passing te diluted process water into a phosphate analyzer; determining a phosphate concentration of the diluted process water; and determining a phosphate concentration of the process water using a ratio of a dilution water flow rate to a flow rate of the portion of the process water and the phosphate concentration of the diluted process water.

The method includes calculating an amount of a phosphate control additive to add to the process water.

The method includes injecting the phosphate control additive into the process water to form treated water.

In some embodiments, the phosphate control additive may be selected from ferric sulfate, ferric chloride, sodium aluminate, aluminum chlorohydrate, aluminum, aluminum chloride, polyaluminum chloride, cerium chloride, calcium-based coagulant, anionic polymer flocculant, and any combination thereof.

In some embodiments, the phosphate control additive may be selected from ferric sulfate, ferric chloride, and any combination thereof.

The method includes passing the portion of the process water through a flow meter.

The method includes passing the dilution water through a flow meter.

In some embodiments, the flow meter may be an oval gear meter.

The method includes passing the treated water through a filtration system.

In some embodiments, the method may include passing the treated water through the filtration system when the phosphate concentration in the diluted process water is below about 50 ppm.

In certain embodiments, a method of treating process water used in an automotive phosphating process is disclosed. The method may include passing diluted process water into a phosphate analyzer, wherein the diluted process water may be a mixture of the process water and dilution water.

In some embodiments, the method may include determining a phosphate concentration of the diluted process water; determining a phosphate concentration of the process water using a ratio of a dilution water flow rate to a flow rate of the process water that passed through an oval gear meter and the phosphate concentration of the diluted process water; and calculating an amount of a phosphate control additive to add to the process water.

The method includes injecting the phosphate control additive into the process water to form treated water; and passing the treated water through a filtration system.

In some embodiments, use of an apparatus in a method of treating water is disclosed (but not according to the invention). The apparatus may include a process water line; a sample process water line in fluid communication with the process water line; a dilution line in fluid communication with the sample process water line; a diluted process water line in fluid communication with the sample process water line, dilution line, and a phosphate analyzer; and a chemical additive feed line in fluid communication with the process water line downstream from the sample process water line.

The foregoing has outlined rather broadly the features and technical advantages of the present disclosure in order that the detailed description that follows may be better understood. Additional features and advantages of the disclosure will be described hereinafter that form the subject of the claims of this application.

### BRIEF DESCRIPTION OF THE DRAWINGS

A detailed description of the invention is hereafter described with specific reference being made to the drawings in which:
FIG. 1 shows a schematic of an embodiment of an apparatus for treating water containing phosphate;
FIG. 2 shows a schematic of an embodiment of an apparatus (not according to the invention) that includes a reverse osmosis unit for treating water containing phosphate;
FIG. 3 shows the effluent phosphate level in treated water as a function of increasing dosages of different phosphate control additives;
FIG. 4 shows the effluent phosphate level in treated water as a function of increasing dosages of ferric chloride and ferric sulfate after filtering with a membrane with 0.1 µm pore size;
FIG. 5 shows the effluent phosphate level in treated water as a function of increasing dosages of different phosphate control additives; and
FIG. 6 shows the effect of pH on the effluent phosphate levels of water treated with ferric sulfate.

### DETAILED DESCRIPTION

Various embodiments are described below. The relationship and functioning of the various elements of the embodiments may better be understood by reference to the following detailed description.

To optimize the chemical dosage for phosphate control before treatment requires measuring the phosphate level in the process water. These levels can vary on a rinse stage depending on the operating conditions, e.g., production rate (automotive throughput) and dilution (counter flow). Additionally, the phosphate levels can reach levels greater than about 300 ppm. Commercial online phosphate monitoring systems, such as HACH Phosphax^{™} are limited to about 50 ppm with sampling times of about 5-10 minutes. The HACH Phosphax cannot accurately determine the phosphate concentration in water containing greater than about 50 ppm.

Phosphate in the water can lead to fouling of reverse osmosis membranes. Reusing the overflow water from an automotive phosphating process by treatment with a reverse osmosis system requires control of the phosphate concentration to avoid membrane fouling.

To address this drawback, one approach is to isolate the process flow line from the conditioning section, inject treatment chemical, and use the online monitor to adjust the treatment chemical to achieve a targeted phosphate level. The phosphate analyzer samples the water that is already treated with the chemical. Operating in this condition requires initially overdosing the treatment chemical followed by gradually optimizing the dosage based on the process and chemical feed flow rates. Besides using unnecessary amounts of treatment chemical, the treated water may not be fed to the filtration system until the dosage is optimized leading additional and unnecessary water waste.

The apparatus embodiments and method embodiments disclosed herein address the aforementioned drawbacks resulting in a system that reduces water usage and eliminates waste of treatment chemicals.

In some embodiments, an apparatus (not according to the invention) is disclosed for treating process water containing phosphate. The apparatus may include a process water line. The process water line may be in fluid communication with a sample process water line. The sample process water line may be in fluid communication with a dilution line. The sample process water line, the dilution line, and a phosphate analyzer may be in fluid communication with a diluted process water line. The apparatus may also include a chemical additive feed line in fluid communication with the process water line downstream from the sample process water line.

It is envisioned that the apparatus can be installed in any process system where the treatment of phosphate contaminated water is desired. The apparatus may be particularly useful in systems for treating automotive rinse water; however, the apparatus is not necessarily limited to treating rinse overflow water used in automotive processes.

In some embodiments, the sample process water line and the dilution line may each include flow meter. In some embodiments, the sample process water line and the dilution line may each include an oval gear meter. Oval gear meters measure discrete amounts of liquid where accurate volume dispensing may be desired.

In some embodiments, the apparatus may include a bypass water line in fluid communication with the process water line. In some embodiments, the bypass water line may be connected with the process water line at any point after the sample process water line.

In some embodiments, the apparatus may include a filtration system in line with the process water line. In some embodiments, the filtration system may be an ultrafiltration unit. The ultrafiltration unit may include a filtration membrane with a pore size ranging from about 0.01 µm (microns) to about 0.5 µm (microns). In some embodiments, the filtration membrane may have a pore size ranging from about 0.02 µm (microns) to about 0.1 µm (microns). In some embodiments, the filtration membrane may have a pore size ranging of about 0.02 µm (microns). In some embodiments, the filtration membrane may have a pore size ranging of about 0.05 µm (microns). In some embodiments, the filtration membrane may have a pore size ranging of about 0.1 µm (microns).

In some embodiments, the filtration system may be a reverse osmosis unit. In some embodiments, the filtration system may include an ultrafiltration unit and a reverse osmosis unit in series.

In some embodiments, the process water line, the sample process water line, the dilution line, the diluted process water line, and the chemical additive feed line may each independently include a control valve. In some embodiments, the sample process water line and the dilution line may include a check valve.

In some embodiments, the apparatus may include a programmed logic controller in communication with the phosphate analyzer. The phosphate analyzer may be but is not limited to a HACH Phosphax^{™} analyzer.

In some embodiments, the process water line may include a flow meter. In some embodiments, the chemical additive feed line may include a flow meter and a chemical feed pump.

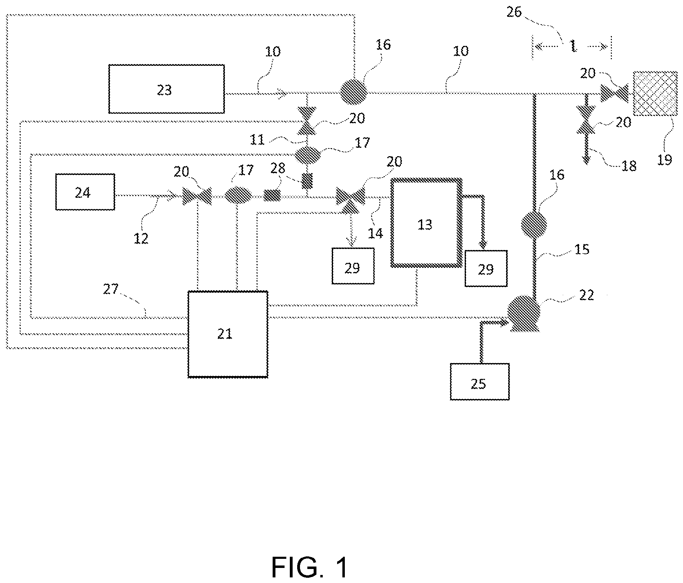

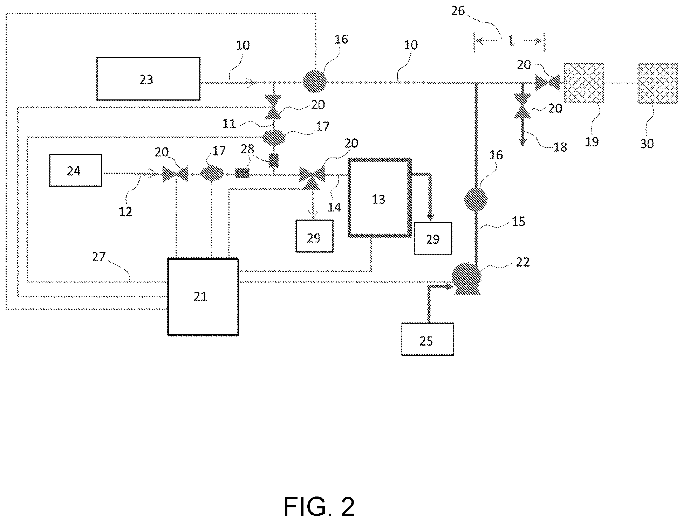

FIG. 1 and FIG 2 (FIG. 2 is not according to the invention) show embodiments of the apparatus. The process water line **10** may be in fluid communication with a sample process water line **11.** The sample process water line **11** may be in fluid communication with a dilution line **12.** The sample process water line **11,** the dilution line **12,** and a phosphate analyzer **13** may be in fluid communication with a diluted process water line **14.** The apparatus may also include a chemical additive feed line **15** in fluid communication with the process water line **10** and downstream from the sample process water line **11.** The process water line **10** and the chemical additive feed line **15** may comprise a flow meter **16.** The sample process line **11** and the dilution line **12** may both comprise flow meters **17** and the flow meters **17** may be oval gear meters. FIG. 1 and 2 (FIG. 2 is not according to the invention) also show that the apparatus may include a bypass water line **18.** The apparatus may also include an ultrafiltration system **19.** Control valves **20** may be used to control the flow of process water. A controller **21,** such as a programmed logic controller, may be connected to the control valves **20,** flow meters **16** and **17,** phosphate analyzer **13,** and chemical feed pump **22** via any suitable electrical connection **27.** Process water may be fed into the process water line **10** from a phosphatizing process **23.** Dilution water may be fed into the dilution line **12** from any suitable water source **24.** The chemical feed pump **22** may pump chemicals from a chemical additive holding tank **25** into the process water line **10.** The location of injection into the process water line **10** should be at a certain distance **26** from the ultrafiltration system **19.** In addition, the sample process water line **11** and the dilution line **12** may both comprise check valves **28.** Waste water may be directed to effluent holding tanks **29** for further treatment or disposal. FIG. 2 shows an embodiment (not according to the invention) where a reverse osmosis unit **30** may be in series with the ultrafiltration system **19.**

According to the invention as claimed in claim 1, a method of treating water is disclosed. The method includes diverting a portion of process water comprising phosphate and diluting the portion of the process water with dilution water to form diluted process water. The method includes passing the diluted process water into a phosphate analyzer to determine the phosphate concentration. The phosphate concentration in the process water is determined using a ratio of the dilution water flow rate to a flow rate of the portion of the process water or diverted process water and the phosphate concentration of the diluted process water.

The method includes calculating an amount of a phosphate control additive to add to the process water. Based on the phosphate levels in the process water, a predetermined proportion of the phosphate control additive can be added to the process water to remove phosphate. The method includes injecting the phosphate control additive into the process water to form treated water.

The phosphate control additive can be, but is not limited to, ferric sulfate, ferric chloride, sodium aluminate, aluminum chlorohydrate, aluminum, aluminum chloride, polyaluminum chloride, cerium chloride, calcium-based coagulant, anionic polymer flocculant, or any combination thereof. In some embodiments, the phosphate control additive may be a salt of iron(III). In some embodiments, the phosphate control additive may be ferric chloride. In some embodiments, the phosphate control additive may be ferric sulfate. In some embodiments, the phosphate control additive may be sodium aluminate. In some embodiments, the phosphate control additive may be polyaluminum chloride. In some embodiments, the phosphate control additive may be aluminum chlorohydrate. In some embodiments, the phosphate control additive may be cerium chloride.

The method includes passing the treated water through a filtration system. The filtration system is an ultrafiltration unit as described above or a reverse osmosis system.

In some embodiments, the treated water is passed through the filtration system when the phosphate concentration in the diluted process water is below about 50 ppm. In some embodiments, the phosphate concentration in the diluted process water may be below about 40 ppm, about 30 ppm, or about 20 ppm when the treated water is passed through the filtration system.

In some embodiments, the process water may bypass the filtration system until the phosphate concentration in the diluted process water reaches the detection limit of the phosphate analyzer. The method includes diverting the process water before reaching the filtration system until the phosphate concentration in the diluted process water reaches a predetermined phosphate concentration. The predetermined phosphate concentration is the highest level of phosphate that the phosphate analyzer can reliably detect. The predetermined phosphate concentration may be about 50 ppm.

The method includes passing the portion of the process water through a flow meter. The process water that is diverted from the main process line is diluted then analyzed in the phosphate analyzer to determine the phosphate concentration. The flow rate of the diverted process water is determined using any of the flow meters described in the present application. In some embodiments, the flow meter may be an oval gear meter.

The method includes passing the dilution water through a flow meter. The means for determining the flow rate of the dilution water are as described in the present application. In some embodiments, the flow rate of the dilution water may be determined using an oval gear meter. The dilution water is mixed with the portion of the process water or that process water that is diverted for sampling.

In some embodiments, a method of treating process water used in an automotive phosphating process may include passing the process water through an oval gear meter and passing dilution water through an oval gear meter. The method may include diluting the process water with the dilution water to form a diluted process water. The diluted process water may then be fed into a phosphate analyzer to determine the phosphate concentration of the diluted process water. The phosphate concentration in the process water can be determined using the ratio of the dilution water flow rate to the flow rate of the process water that passed through the oval gear meter and the phosphate concentration of the diluted process water. Once the phosphate concentration in the process water has been determined the amount of phosphate control additive to inject into the process water can be calculated. The phosphate control additive may be injected into the process water to form treated water. After injecting the phosphate control additive into the process water, the treated water may be passed through a filtration system.

In some embodiments, the method may include injecting the phosphate control additive at a position in the process water line that will allow for sufficient mixing before the treated water enters the filtration system. The injection location on the process water line can be determined by one of skill in the art. Factors that may influence the distance between the injection position and the filtration system may be flow rate, pipe size, injection means, and phosphate control additive.

The phosphate control additive may be injected into the process water using a quill or Pareto^{™} device. One of skill in the art will appreciate that any injection means may be used that allows the phosphate control additive to mix efficiently with the process water.

The method steps may be controlled from a central controller using the signals from the flow meters, control valve state, chemical feed pump, and PO₄ analyzer. Implementation of this control strategy addresses the risk associated with potential RO membrane fouling.

### Examples

### Example 1

Several different phosphate control additives were tested; the different chemistries and their trade names/identification are listed below in Table 1.

**Table 1. Chemistries tested and their identification.**

| Phosphate Control Additive Identification | Chemistry |
|---|---|
| Additive 1 | Ferric sulfate |
| Additive 2 | Aluminum chlorohydrate |
| Additive 3 | Cerium chloride |
| Additive 4 | High molecular weight anionic inverse emulsion flocculant |
| Additive 5 | 38 wt% solution of sodium aluminate |
| Additive 6 | Zirconium modified polyaluminum chloride |
| Additive 7 | Polyaluminum chloride |
| Additive 8 | Aluminum chloride (AlCl₃) |

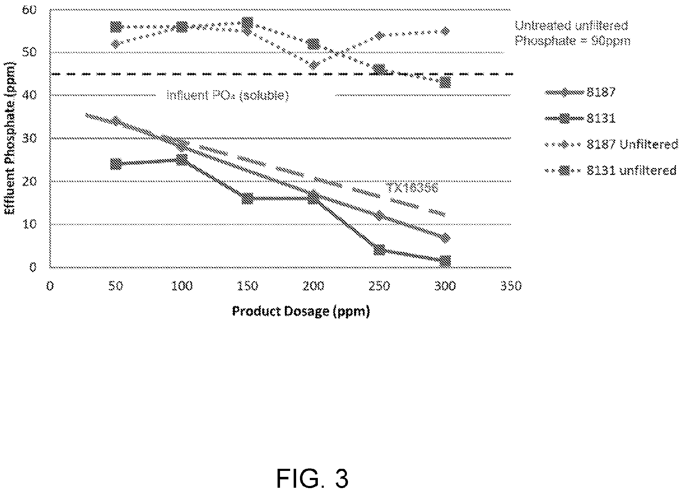

FIG. 3 shows a blended phosphate water stream treated with and increasing dosage of Additive 1 or Additive 2, and the resulting effluent phosphate concentrations. Total phosphate in the phosphate water stream before treatment was about 90ppm. The product dosage as ppm neat product is labeled on the horizontal axis, and effluent phosphate (PO₄) in ppm is on the vertical axis. The data represented by squares represent water treated with Additive 1, while the diamonds represent water treated with Additive 2. Both chemistries were tested and effluent was measured before filtering (dotted line) and after filtering (solid line) with a 0.45 µm (micron) filter. A measurement of the untreated but filtered water was also performed indicated by the black dashed line (~45ppm). Lastly, the dashed line labeled Additive 3 shows that chemistry's overall trend in performance in reducing phosphate concentration.

Initial COI results from testing Additive 1 and Additive 2 indicate that three major findings: 1) Low level phosphate results can be achieved with chemistry and equipment combination; 2) Additive 1 appears to be more effective at removing phosphate than Additive 2; and 3) Filtering the samples greatly reduced the effluent phosphate readings. Filtering the untreated sample removed more phosphate than using a chemistry listed in Table 1 without filtering. Other tests were completed to evaluate mixing time, which showed no significant change in effluent phosphate levels between about 5 and about 15 minutes.

### Example 2

Table 2 shows 11 chemistry tests completed on phosphate recycle water, and the corresponding effluent phosphate results. The top row of the table is labeled for what each column filled in below represents. The pH of the water was tested before and after adding the chemistry at the dosage indicated in the Table below. Three phosphate measurements taken on the effluent which include: total, organic and inorganic phosphate. All values besides pH are in parts per million. Three different chemistries and combinations were tested including products Additive 2, Additive 3, and FeCl₃.

**Table 2. Chemistry effect on phosphate levels.**

| Sample | pH | Chemistry 1 | Dosage (ppm) | Chemistry 2 | Dosage (ppm) | pHf | Total PO₄ (ppm) | Org PO₄ (ppm) | InOrg PO₄ (ppm) |
|---|---|---|---|---|---|---|---|---|---|
| Base | | | | | | | 49 | <49 | 49 |
| 1 | 11.5 | N/A | N/A | N/A | N/A | 11.5 | 1.8 | <1.8 | 0 |
| 2 | 8.21 | Additive 2 | 250 | N/A | N/A | 8.0 | 11 | <11 | 0 |
| 3 | 8.3 | Additive 2 | 350 | N/A | N/A | 7.8 | 11 | 1 | 10 |
| 4 | N/A | Additive 3 | 400 | N/A | N/A | 7.3 | 2.7 | 0.1 | 2.6 |
| 5 | N/A | Additive 3 | 500 | N/A | N/A | 7.3 | 1.6 | 0.1 | 1.5 |
| 6 | N/A | Additive 3 | 700 | N/A | N/A | 7.3 | <1.0 | <1.0 | <1.0 |
| 7 | N/A | FeCl₃ | 125 | N/A | N/A | 6.75 | 32 | <32 | 32 |
| 8 | N/A | FeCl₃ | 200 | N/A | N/A | 6.75 | 27 | 3 | 24 |
| 9 | N/A | FeCl₃ | 150 | Additive 3 | 300 | 6.6 | <1.0 | <1.0 | <1.0 |
| 10 | 8.6 | Additive 2 | 250 | Additive 3 | 300 | 7.93 | 1.4 | 1.3 | <0.2 |
| 11 | 8.23 | Additive 2 | 150 | Additive 3 | 300 | 7.88 | <1.0 | <1.3 | <1.0 |

### Example 3

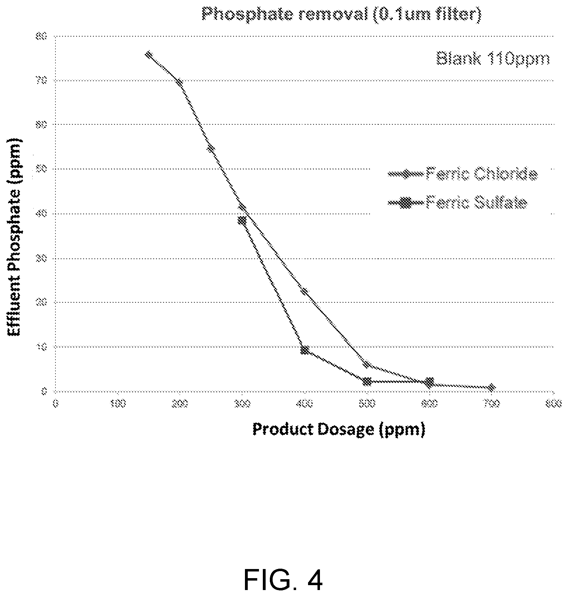

Ferric chloride (about 40 wt% the balance being water) and ferric sulfate (Additive 1) were compared to each other on a phosphate stream mix, with a starting phosphate level of about 110 ppm. FIG. 4 shows a dosage curve for ferric chloride and ferric sulfate on a blended phosphate stream with resulting effluent phosphate measurements after filtering with a 0.1 µm filter. The horizontal axis shows product dosage in ppm, and the vertical axis shows effluent phosphate (total) in ppm. The untreated sample measured at 110 ppm phosphate.

Ferric chloride and ferric sulfate had similar results, both showing they could reduce phosphate down to single digits after filtering. Ferric sulfate had a slight performance advantage under about 600 ppm. Other chemistries of interest were tested in the same manner as above including Additive 3, Additive 8, Additive 7, Additive 5 and a supplier product (Additive 6). Their optimum dosage and resulting phosphate measurement are shown in Table 3 below. These results show that Additive 7 and Additive 5, ferric chloride, and ferric sulfate are the most effective products in removing phosphate. All products were tested at pH between about 6.5 and about 7.

Table 3 shows seven chemistry tests completed on phosphate recycle water and the corresponding effluent phosphate results. The phosphate concentration was measured after filtering with a 0.1 µm filter.

**Table 3. Effluent phosphate concentration using different chemistries.**

| Chemistry | Dosage (ppm) | Results (ppm Phosphate) |
|---|---|---|
| Additive 3 | 400 | 8.9 |
| AlCl₃ | 600 | 5.5 |
| Additive 7 | 600 | 0.7 |
| Additive 6 | 500; 600 | 22.3; 0.4 |
| Additive 5 | 700 | 0 |
| Ferric chloride (40%) | 600 | 1.5 |
| Additive 1 | 600 | 2.2 |

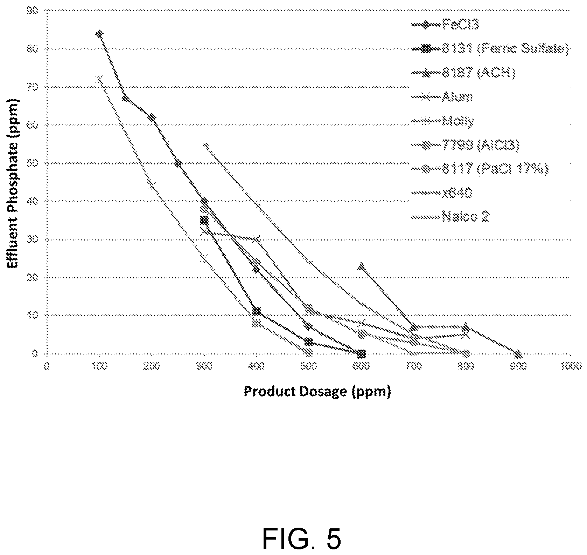

FIG. 5 shows the full dosage curves for the chemistries tested above. Additive 3, Additive 7, ferric sulfate and ferric chloride (40%) demonstrated superior phosphate removal based on performance. Single digit phosphate numbers were achieved at around about 500 to about 600 ppm. All tests were completed at pH about 6.5-7. The phosphate concentration was measured after filtering with a 0.1 µm filter. The horizontal axis shows product dosage in ppm, and the vertical shows effluent phosphate (total) in ppm. The untreated sample measured at about 110 ppm phosphate.

### Example 4

To see the effect of pH on the sample, about 500 ppm of Additive 1 was tested on the phosphate stream at pH about 5.7, about 6.2, about 7.3 and about 9.2. This pH adjustment was done after the product was dosed into the sample; thereby, allowing the sample to react at the certain pH. Effluent phosphate showed similar results for all pH values at and above a pH of about 6.2. Phosphate removal was unaffected by pH at or above a pH of about 6.5.

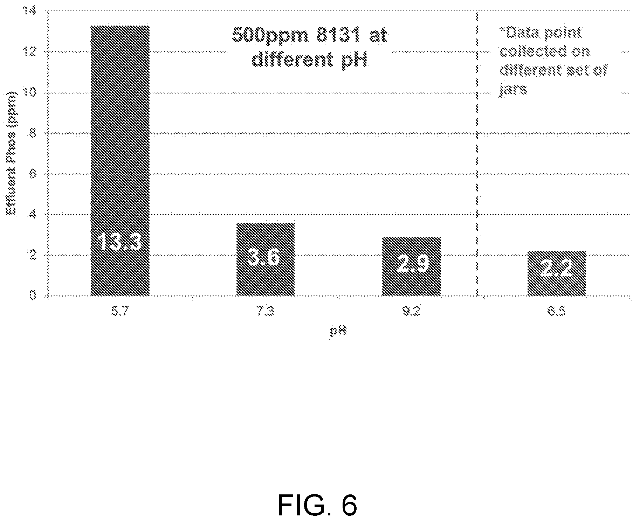

FIG. 6 shows phosphate measurements after the phosphate water stream was treated with about 500 ppm of Additive 1. The horizontal axis shows sample pH, and the vertical axis shows effluent phosphate in ppm. Each test was adjusted to a different pH after Additive 1 addition to see the effect of pH on phosphate removal. The phosphate concentration was measured after filtering with a 0.1 µm filter. One data point, at pH of about 6.5, was collected at a different time than the other samples, but was tested on the same water.

### Example 5

Field and pilot trials were conducted to test feasibility on a larger scale. Additive 7and Additive 1 were chosen for the pilot study based on cost and phosphate removal performance. The reaction and filtering steps were scaled up. Filtering was performed using an ultrafiltration membrane with a pore size of about 0.05 or about 0.02 µm. Results showed that about 800 ppm of Additive 7or about 650 ppm of Additive 1 were able to achieve an effluent phosphate level of about 3 ppm or less. Results are shown below in Table 4.

**Table 4. Pilot study using Additive 7or Additive 1 and ultrafiltration.**

| Chemistry and Dose | Initial pH before Chemistry addition | Filter Pore Size (µm) | Hach PO₄ Measurement (ppm) | CA ICP Phosphorus (Theoretical PO₄) (ppm) | CA Total PO₄ (ppm) |
|---|---|---|---|---|---|
| Additive 7; 800 ppm | 8 | 0.02 | 0.9 | 0.51 (1.6) | <5 |
| | 8 | 0.05 | 1 | 0.57 (1.9) | <5 |
| Additive 1; 650 ppm | 7.5 | 0.02 | 1.3 | 0.83 (2.7) | <5 |
| | Unknown | 0.05 | 1.5 | 0.81 (2.6) | <5 |
| No Treatment | - | - | - | 39 (125) | 110 |

The labeled columns describe the chemistry tested, the pH adjustment before chemical addition, the filter size used, the HACH phosphate analyzer reading onsite, the inductively coupled plasma (ICP) result for effluent phosphorous, and the total phosphate in the sample.

Additionally, the pH within the working tanks was adjusted after addition of the chemicals. Mixing for coagulation was provided by a centrifugal pump that recirculated the rinse water in the working tanks until a stable floc was observed. Phosphate concentrations were measured onsite by Nalco using HACH analytical test kits and a portable spectrophotometer. A single 1.83 m (6') long x 1.27 cm (0.5") diameter polyvinylidene fluoride tubular membrane module was used for solids separation. Membranes pore sizes of about 0.02 and about 0.05 µm were tested, each module contained a membrane surface area of about 6.97 dm² (0.75 ft²).

The chemically precipitated rinse water in the working tank was pumped through the membrane modules at a crossflow velocity of approximately 3.5 meters/second and the retentate was recirculated back to the respective working tank. The permeate was directed to sample containers so that it could be tested both onsite for phosphorus and offsite using ICP.

It was determined that both membranes (with the 0.02 and 0.05 µm (micron) pore sizes) were adequate for phosphorus and solids removal to provide a suitable permeate for reverse osmosis feed water. Additionally Nalco solutions Additive 7and Additive 1 were also suitable to achieve the treatment goals.

### Example 6

Table 5 shows the theoretical removal rate vs the experimental removal rate for 1 ppm of product to remove 1 ppm of phosphate. For the experimental rate, data points were averaged from the lowest dosage, cut off at the dosage able to achieve less than about 2 ppm phosphate.

**Table 5. Theoretical removal rate compared to experimental results**

| Product | Theoretical Removal Rate | Average Experimental Result |
|---|---|---|
| FeCl₃ (40 wt%) | 4.3 | 4.7 |
| Ferric sulfate (50 wt%) | 3.4 | 4.2 |
| Aluminum chlorohydrate (50 wt%) | 6.6 | 7.2 |
| Aluminum chloride (40 wt%) | 4.6 | 5.2 |
| Aluminum (dry) | 3.3 | 5.7 |
| Polyaluminum chloride | - | 4.2 |

In the drawings, 8117 refers to polyaluminum chloride, TX16356 is a defoamer, 8187 refers to Additive 2, 8131 refers to Additive 1, molly refers to Additive 3, Alum refers to aluminum sulfate, x640 refers to Additive 6, and Nalco 2 refers to sodium aluminate.

## Claims

1. A method of treating water, comprising:
- diverting a portion of process water having a flow rate and comprising phosphate;
- diluting the portion of the process water with dilution water having a flow rate, to form diluted process water;
- passing the diluted process water into a phosphate analyzer;
wherein the portion of the process water, the dilution water, the diluted process water and the phosphate analyzer are in fluid communication;
- determining a phosphate concentration of the diluted process water;
- determining a phosphate concentration of the process water using a ratio of the dilution water flow rate to the flow rate of the portion of the process water and the phosphate concentration of the diluted process water, wherein the flow rate of the dilution water and the flow rate of the portion of the process water are controlled by control valves and measured by flow meters;
wherein the phosphate analyzer, control valves and flow meters are in electrical communication with a controller;
- calculating an amount of a phosphate control additive to add to the process water;
- injecting the phosphate control additive into the process water to form treated water;
- passing the treated water through a filtration system, wherein the filtration system is an ultrafiltration unit or a reverse osmosis system;
**characterized in that**
- before reaching the filtration system, diverting the process water until the phosphate concentration in the diluted process water reaches a predetermined phosphate concentration, wherein the predetermined phosphate concentration is the highest level of phosphate that the analyzer can reliably detect.

2. The method of claim 1, wherein the predetermined phosphate concentration is 50 ppm.

3. The method of claim 1 or 2, wherein the phosphate control additive is selected from ferric sulfate, ferric chloride, sodium aluminate, aluminum chlorohydrate, aluminum, aluminum chloride, polyaluminum chloride, cerium chloride, calcium-based coagulant, anionic polymer flocculant, and any combination thereof, preferably wherein the phosphate control additive is selected from ferric sulfate, ferric chloride, and any combination thereof.

4. The method of any one of claims 1 to 3, further comprising the step of passing the portion of the process water through a flow meter and/or further comprising the step of passing the dilution water through a flow meter.

5. The method of claim 4, wherein the flow meter is an oval gear meter.

6. The method of claim 5, wherein the water is process water used in an automotive phosphating process.

## Patentansprüche

1. Verfahren zum Behandeln von Wasser, umfassend:
- Umleiten eines Anteils von Prozesswasser, das eine Strömungsgeschwindigkeit aufweist und Phosphat umfasst;
- Verdünnen des Anteils des Prozesswassers mit Verdünnungswasser, das eine Strömungsgeschwindigkeit aufweist, um verdünntes Prozesswasser auszubilden;
- Leiten des verdünnten Prozesswassers in einen Phosphatanalysator;
wobei der Anteil des Prozesswassers, das Verdünnungswasser, das verdünnte Prozesswasser und der Phosphatanalysator in Fluidverbindung stehen;
- Bestimmen einer Phosphatkonzentration des verdünnten Prozesswassers;
- Bestimmen einer Phosphatkonzentration des Prozesswassers unter Verwendung eines Verhältnisses der Verdünnungswasserströmungsgeschwindigkeit zu der Strömungsgeschwindigkeit des Anteils des Prozesswassers und der Phosphatkonzentration des verdünnten Prozesswassers, wobei die Strömungsgeschwindigkeit des Verdünnungswassers und die Strömungsgeschwindigkeit des Anteils des Prozesswassers durch Steuerventile gesteuert und durch Durchflussmesser gemessen werden;
wobei der Phosphatanalysator, Steuerventile und Durchflussmesser in elektrischer Verbindung mit einer Steuerung stehen;
- Berechnen einer Menge eines Phosphatsteueradditivs, die dem Prozesswasser zuzugeben ist;
- Einspritzen des Phosphatsteueradditivs in das Prozesswasser, um behandeltes Wasser auszubilden;
- Leiten des behandelten Wassers durch ein Filtrationssystem, wobei das Filtrationssystem eine Ultrafiltrationseinheit oder ein Umkehrosmosesystem ist;
**dadurch gekennzeichnet, dass**
- vor einem Erreichen des Filtrationssystems, Umleiten des Prozesswassers, bis die Phosphatkonzentration in dem verdünnten Prozesswasser eine vorbestimmte Phosphatkonzentration erreicht, wobei die vorbestimmte Phosphatkonzentration der höchste Phosphatgehalt ist, den der Analysator zuverlässig erfassen kann.

2. Verfahren nach Anspruch 1, wobei die vorbestimmte Phosphatkonzentration 50 ppm beträgt.

3. Verfahren nach Anspruch 1 oder 2, wobei das Phosphatsteueradditiv ausgewählt ist aus Eisen(III)-sulfat, Eisen(III)-chlorid, Natriumaluminat, Aluminiumchlorhydrat, Aluminium, Aluminiumchlorid, Polyaluminiumchlorid, Cerchlorid, calciumbasiertem Koagulans, anionischem Polymer-Flockungsmittel und einer beliebigen Kombination davon, vorzugsweise wobei das Phosphatsteueradditiv ausgewählt ist aus Eisen(III)-sulfat, Eisen(III)-chlorid und einer beliebigen Kombination davon.

4. Verfahren nach einem der Ansprüche 1 bis 3, ferner umfassend den Schritt des Leitens des Anteils des Prozesswassers durch einen Durchflussmesser und/oder ferner umfassend den Schritt des Leitens des Verdünnungswassers durch einen Durchflussmesser.

5. Verfahren nach Anspruch 4, wobei der Durchflussmesser ein Ovalradzähler ist.

6. Verfahren nach Anspruch 5, wobei das Wasser Prozesswasser ist, das in einem Automobilphosphatierverfahren verwendet wird.

## Revendications

1. Procédé de traitement d'eau, comprenant :
- la dérivation d'une partie de l'eau de procédé ayant un débit et comprenant du phosphate ;
- la dilution de la partie de l'eau de procédé avec de l'eau de dilution ayant un débit, pour former de l'eau de procédé diluée ;
- le fait de passer l'eau de procédé diluée dans un analyseur de phosphate ;
dans lequel la partie de l'eau de procédé, l'eau de dilution, l'eau de procédé diluée et l'analyseur de phosphate sont en communication fluidique ;
- la détermination d'une concentration en phosphate de l'eau de procédé diluée ;
- la détermination d'une concentration en phosphate de l'eau de procédé en utilisant un rapport du débit d'eau de dilution sur le débit de la partie de l'eau de procédé et la concentration en phosphate de l'eau de procédé diluée, dans lequel le débit de l'eau de dilution et le débit de la partie de l'eau de procédé sont régulés par des vannes de régulation et mesurés par des débitmètres ;
dans lequel l'analyseur de phosphate, les vannes de commande et les débitmètres sont en communication électrique avec un dispositif de commande ;
- le calcul d'une quantité d'un additif de régulation de phosphate à ajouter à l'eau de procédé ;
- l'injection de l'additif de commande de phosphate dans l'eau de procédé pour former de l'eau traitée ;
- le fait de passer l'eau traitée à travers un système de filtration, dans lequel le système de filtration est une unité d'ultrafiltration ou un système d'osmose inverse ;
**caractérisé en ce que**
- avant d'atteindre le système de filtration, la déviation de l'eau de procédé jusqu'à ce que la concentration en phosphate dans l'eau de procédé diluée atteigne une concentration en phosphate prédéterminée, dans lequel la concentration en phosphate prédéterminée est le niveau de phosphate le plus élevé que l'analyseur peut détecter de manière fiable.

2. Procédé selon la revendication 1, dans lequel la concentration prédéterminée en phosphate est de 50 ppm.

3. Procédé selon la revendication 1 ou 2, dans lequel l'additif de contrôle du phosphate est choisi parmi le sulfate ferrique, le chlorure ferrique, l'aluminate de sodium, le chlorhydrate d'aluminium, l'aluminium, le chlorure d'aluminium, le polychlorure d'aluminium, le chlorure de cérium, un coagulant à base de calcium, un floculant polymère anionique, et toute combinaison de ceux-ci, de préférence dans lequel l'additif de contrôle du phosphate est choisi parmi le sulfate ferrique, le chlorure ferrique, et toute combinaison de ceux-ci.

4. Procédé selon l'une quelconque des revendications 1 à 3, comprenant en outre l'étape consistant à faire passer la partie de l'eau de procédé à travers un débitmètre et/ou comprenant en outre l'étape consistant à faire passer l'eau de dilution à travers un débitmètre.

5. Procédé selon la revendication 4, dans lequel le débitmètre est un débitmètre à engrenages ovales.

6. Procédé selon la revendication 5, dans lequel l'eau est une eau de traitement utilisée dans un procédé de phosphatation automobile.
